# EUROPÄISCHE PATENTSCHRIFT

(11) **EP 4 264 787 B1**
(45) Veröffentlichungstag und Bekanntmachung des Hinweises auf die Patenterteilung: **12.02.2025**
(21) Anmeldenummer: 21835227.6
(22) Anmeldetag: 08.12.2021
(51) Int. Cl.: H02K 1/16, H02K 29/03

(54) **STATOR FÜR EINE ELEKTRISCHE MASCHINE, ELEKTRISCHE MASCHINE ZUM ANTREIBEN EINES FAHRZEUGS UND FAHRZEUG**
STATOR FOR AN ELECTRIC MACHINE, ELECTRIC MACHINE FOR DRIVING A VEHICLE, AND VEHICLE
STATOR POUR UNE MACHINE ÉLECTRIQUE, MACHINE ÉLECTRIQUE POUR ENTRAÎNER UN VÉHICULE ET VÉHICULE

(30) Priorität: 16.12.2020 DE 102020216006
(43) Veröffentlichungstag der Anmeldung: 25.10.2023
(73) Patentinhaber: Valeo eAutomotive Germany GmbH, 91056 Erlangen (DE)
(72) Erfinder: DOTZ, Boris, 97616 Bad Neustadt a.d.Saale (DE)
(74) Vertreter: Valeo Powertrain Systems
(86) Internationale Anmeldenummer: PCT/EP2021/084854
(87) Internationale Veröffentlichungsnummer: WO 2022/128696

(56) Entgegenhaltungen:
- JP-B2- 3 590 623
- US-B1- 6 288 471
- US-B2- 9 590 458

## Beschreibung

Die vorliegende Erfindung betrifft einen Stator für eine elektrische Maschine, wobei der Stator eine Statorwicklung mit einer Anzahl N Phasenwicklungen, eine Anzahl P Polpaare und einen Statorkern, in dem Nuten ausgebildet sind, wobei die Statorwicklung in den Nuten angeordnet ist, aufweist; wobei der Statorkern in 2·P·N gleichmäßig in Umfangsrichtung aufeinander folgende Wicklungszonen untergliedert ist; wobei der Statorkern eine Vielzahl von Ausnehmungen, die sich in axialer Richtung von einer ersten Stirnseite des Statorkerns zu einer der ersten Stirnseite gegenüberliegenden zweiten Stirnseite des Statorkerns erstrecken, aufweist; wobei die Ausnehmungen zumindest eine erste Anordnung und eine zweite Anordnung von jeweils in Umfangsrichtung aufeinander folgenden Ausnehmungen ausbilden; wobei bei jeder Anordnung wenigstens zwei Ausnehmungen zu einer der Wicklungszonen gehören; wobei bei jeder Anordnung jedes Paar von in Umfangsrichtung benachbarten Ausnehmungen, die zur selben Wicklungszone gehören, einen ersten Winkelabstand in Umfangsrichtung zueinander aufweist; wobei bei jeder Anordnung jedes Paar von in Umfangsrichtung benachbarten Ausnehmungen, die zu verschiedenen Wicklungszonen gehören, einen zweiten Winkelabstand in Umfangsrichtung zueinander aufweist.

Daneben betrifft die Erfindung eine elektrische Maschine zum Antreiben eines Fahrzeugs.

Das Dokument US 2015/0381000 A1 offenbart einen Stator für eine rotierende elektrische Maschine, umfassend einen ringförmigen Statorkern mit einer Vielzahl von Paaren von Nuten für eine erste Phase, einer Vielzahl von Paaren von Nuten für eine zweite Phase und einer Vielzahl von Nuten für eine dritte Phase, die aufeinanderfolgend und wiederholend in Umfangsrichtung vorgesehen sind; und eine Statorwicklung, umfassend eine Wicklung für eine erste Phase, eine Wicklung eine zweite Phase und eine Wicklung für eine dritte Phase, die am Statorkern angeordnet sind, um in den entsprechenden Nuten aufgenommen zu werden. In den Nuten aufgenommene Abschnitte der Statorwicklung sind radial in vier Schichten gestapelt.

Die Artikel von I. Petrov, P. Ponomarev, und J. Pyrhonen: "Torque ripple reduction in 12-slot 10-pole fractional slot permanent magnet synchronous motors with non-overlapping windings by implementation of unequal stator teeth widths," International Conference on Electrical Machines (ICEM), pp. 1455-1460, 2014; von I. Petrov, P. Ponomarev, Y. Alexandrova, and J. Pyrhonen: "Unequal Teeth Widths for Torque Ripple Reduction in Permanent Magnet Synchronous Machines With Fractional-Slot Non-Overlapping Windings," IEEE Trans. Magn, vol. 51, no. 2, pp. 1-9, 2015; und von P. Ponomarev, I. Petrov, and J. Pyrhonen: "Torque ripple reduction in double-layer 18/16 TC-PMSMs by adjusting teeth widths to minimize local saturation," International Conference on Electrical Machines (ICEM), pp. 1461-1467, 2014 offenbaren jeweils einen Stator mit konzentrierten Zahnspulenwicklungen und ungleichen Statorzahnweiten.

Das Dokument US 9 590 458 B2 offenbart einen Statorkern mit Statornuten.

Während des Betriebs einer elektrischen Maschine mit einem Stator, der gleichmäßig in Umfangsrichtung angeordnete Nuten aufweist, entstehen parasitäre Kräfte. Dadurch kann eine hohe Drehmomentwelligkeit auftreten, die unerwünschte Vibrationen und Betriebsgeräusche verursacht.

Der Erfindung liegt die Aufgabe zugrunde, eine Möglichkeit zum ruhigeren Betrieb einer elektrischen Maschine anzugeben.

Diese Aufgabe wird erfindungsgemäß bei einem Statorkern der eingangs genannten Art dadurch gelöst, dass jede Ausnehmung der ersten Anordnung mit einer Ausnehmung der zweiten Anordnung zusammenhängend eine Nut des Statorkerns ausbildet, die Ausnehmung der ersten Anordnung radial weiter innen als die Ausnehmung der zweiten Anordnung angeordnet ist und die Ausnehmung einer der ersten und zweiten Anordnungen eine größere Ausdehnung in Umfangsrichtung aufweist als die Ausnehmung der anderen der ersten und zweiten Anordnungen; wobei bei mindestens einer Anordnung der erste Winkelabstand und der zweite Winkelabstand unterschiedlich sind, sodass die Anordnung als ungleichmäßige Anordnung ausgebildet ist.

Der Stator für eine elektrische Maschine weist eine Statorwicklung auf. Die Statorwicklung weist eine Anzahl N Phasenwicklungen. Der Stator weist eine Anzahl P Polpaare auf. Der Stator weist einen Statorkern auf. Im Statorkern sind Nuten ausgebildet. Die Statorwicklung ist in den Nuten angeordnet. Der Statorkern ist in 2·P·N Wicklungszonen untergliedert. Die Wicklungszonen folgen gleichmäßig in Umfangsrichtung aufeinander. Der Statorkern weist eine Vielzahl von Ausnehmungen auf. Die Ausnehmungen erstrecken sich in axialer Richtung von einer ersten Stirnseite des Statorkerns zweiten Stirnseite des Statorkerns. Die zweite Stirnseite liegt der ersten Stirnseite gegenüberliegenden. Die Ausnehmungen bilden zumindest eine erste Anordnung und eine zweite Anordnung von jeweils in Umfangsrichtung aufeinander folgenden Ausnehmungen aus. Bei jeder Anordnung gehören wenigstens zwei Ausnehmungen zu einer der Wicklungszonen. Bei jeder Anordnung weist jedes Paar von in Umfangsrichtung benachbarten Ausnehmungen, die zur selben Wicklungszone gehören, einen ersten Winkelabstand Umfangsrichtung zueinander auf. Bei jeder Anordnung weist jedes Paar von in Umfangsrichtung benachbarten Ausnehmungen, die zu verschiedenen Wicklungszonen gehören, einen zweiten Winkelabstand in Umfangsrichtung zueinander auf. Jede Ausnehmung der ersten Anordnung bildet mit einer Ausnehmung der zweiten Anordnung zusammenhängend eine Nut des Statorkerns aus. Die Ausnehmung der ersten Anordnung ist radial weiter innen als die Ausnehmung der zweiten Anordnung angeordnet. Die Ausnehmung einer der ersten und zweiten Anordnungen weist eine größere Ausdehnung in Umfangsrichtung auf als die Ausnehmung der anderen der ersten und zweiten Anordnungen. Bei mindestens einer Anordnung sind der erste Winkelabstand und der zweite Winkelabstand unterschiedlich sind, sodass die Anordnung als ungleichmäßige Anordnung ausgebildet ist.

Der erfindungsgemäße Stator zeichnet sich insbesondere dadurch aus, dass die sich in axialer Richtung erstreckenden Ausnehmungen zumindest bei einer Anordnung nicht gleichmäßig in Umfangsrichtung angeordnet sind, sondern in Bezug auf eine jeweilige Wicklungszone so verschoben sind, dass der zweite Winkelabstand des Paars von in Umfangsrichtung benachbarten, zu verschiedenen Wicklungszonen gehörenden Ausnehmungen unterschiedlich ist. Der erfindungsgemäße Stator zeichnet sich weiter dadurch aus, dass die erste und zweite Anordnung von Ausnehmungen, welche sich an unterschiedlichen Radialpositionen befinden, unterschiedliche Erstreckungen in Umfangsrichtung aufweisen.

Durch den erfindungsgemäßen Stator kann das Auftreten parasitärer Kräfte beim Betrieb der elektrischen Maschine erheblich reduziert werden, da Rastmomente, die eine erhöhte Drehmomentwelligkeit auslösen, verringert werden. Dies ermöglicht vorteilhafterweise einen ruhigeren, insbesondere vibrations- und geräuschärmeren, Betrieb der elektrischen Maschine ohne nennenswerte Einbußen ihrer Performanz.

Bevorzugt ist der Statorkern als Blechpaket ausgebildet. Die Ausnehmungen erstrecken sich typischerweise parallel zu einer Längsachse des Statorkerns in Axialrichtung. Es wird bevorzugt, dass N = 3 oder N ein ganzzahliges Vielfaches von 3 ist. Es wird ferner bevorzugt, dass P gleich 2, 4, 6 oder 8 ist. Bevorzugt gehören bei der mindestens einen Anordnung je m ≥ 2, insbesondere m = 2, 3 oder 4, Ausnehmungen zu einer der Wicklungszonen. Bevorzugt haben die Ausnehmungen einer jeweiligen Anordnung von der ersten Stirnseite aus betrachtet dieselbe Form.

Es ist bevorzugt, dass die Ausnehmungen einer jeweiligen Anordnung von der ersten Stirnseite aus betrachtet dieselbe Form haben. Insbesondere weisen die Ausnehmungen der ersten Anordnung und zweiten Anordnung jeweils zwei parallele sich im Wesentlichen radial erstreckende Langseiten auf. Bevorzugt sind die Ausnehmungen der ersten Anordnung und/oder der zweiten Anordnung rechteckig. Es ist bevorzugt, dass zwischen den dieselbe Nut ausbildenden Ausnehmungen der ersten und zweiten Anordnung ein Absatz ausgebildet ist.

Der erste Winkelabstand ist bevorzugt als Differenz zwischen den Winkelpositionen der Ausnehmungen des Paars benachbarter Ausnehmungen, die zur selben Wicklungszonen gehören, definiert. Der zweite Winkelabstand ist bevorzugt als Differenz zwischen den Winkelpositionen der Ausnehmungen des Paars benachbarter Ausnehmungen, die zu unterschiedlichen Wicklungszonen gehören, definiert. Die Winkelposition einer jeweiligen Ausnehmung kann definiert sein als Winkelposition einer radialen Tangente an einem Rand der Ausnehmung, betrachtet von der ersten Stirnseite.

Bevorzugt sind der ungleichmäßigen Anordnung die ersten Winkelabstände eines jeweiligen Paar benachbarter Ausnehmungen identisch. Bevorzugt sind bei mehreren ungleichmäßigen Anordnungen die zweiten Winkelabstände identisch. Der zweite Winkelabstand kann kleiner oder größer als der erste Winkelabstand sein. Insbesondere ist der zweite Winkelabstand um wenigstens um 360°/(2·P·N·m·20), bevorzugt wenigstens um 360°/(2·P·N·m·10) kleiner oder größer als der erste Winkelabstand.

Bevorzugterweise weisen die Ausnehmungen der zweiten Anordnung eine größere Ausdehnung in Umfangsrichtung als die Ausnehmungen der ersten Anordnung auf. Dadurch steht in den äußeren Ausnehmungen eine größere Querschnittsfläche für eine Statorwicklung zur Verfügung, wodurch eine radial veränderliche Verteilung der Verluste beim Betrieb der elektrischen Maschine ausgeglichen werden kann.

In bevorzugter Ausgestaltung des erfindungsgemäßen Stators sind die erste Anordnung und die zweite Anordnung als ungleichmäßige Anordnung ausgebildet. Es ist auch möglich, dass die ersten und zweiten Winkelabstände der ersten Anordnung jenen der zweiten Anordnung entsprechen.

Alternativ kann vorgesehen sein, dass die erste Anordnung als ungleichmäßige Anordnung ausgebildet ist und die Ausnehmungen der zweiten Anordnung regelmäßig in Umfangsrichtung des gesamten Statorkerns angeordnet sind. Gemäß einer weiteren Alternative kann vorgesehen sein, dass die zweite Anordnung als ungleichmäßige Anordnung ausgebildet ist und die Ausnehmungen der ersten Anordnung regelmäßig in Umfangsrichtung des gesamten Statorkerns angeordnet sind. Dadurch können die Nuten die erfindungsgemäß vorgesehene verschobene Gestalt annehmen, um den ruhigeren Betrieb zu ermöglichen.

In vorteilhafter Weiterbildung ist dabei vorgesehen, dass eine Nut ausbildende Ausnehmungen, die zu einer zu einer anderen Wicklungszone gehörenden Ausnehmung benachbart sind, derart angeordnet sind, dass sie eine gerade, sich in Radialrichtung erstreckende Randlinie aufweisen. Die Randlinie muss dabei nicht exakt entlang der der Radialrichtung verlaufen, insbesondere, wenn die Ausnehmungen rechteckig sind und sich dementsprechend nicht exakt entlang der Radialrichtung erstrecken.

Es kann alternativ vorgesehen sein, dass die Ausnehmungen der ersten Anordnung und der zweiten Anordnung regelmäßig in Umfangsrichtung des gesamten Statorkerns angeordnet sind. Dann kann eine der im Folgenden beschriebenen Anordnungen als ungleichmäßige Anordnung ausgebildet sein.

Es kann vorgesehen sein, dass die Ausnehmungen einer oder mehrerer weiterer der Anordnungen die Nuten zusammenhängend mit den ersten und zweiten Anordnungen ausbilden, wobei die Ausnehmungen der weiteren Anordnungen radial weiter außen als die Ausnehmungen der zweiten Anordnung angeordnet sind und eine andere, insbesondere größere, Erstreckung in Umfangsrichtung aufweisen. Solche Nuten können auch als mehrfach gestufte Nuten bezeichnet werden. Im Übrigen lassen sich alle Ausführungen zur zweiten Anordnung auf die oder eine jeweilige weitere Anordnung übertragen. Insbesondere kann vorgesehen sein, dass die oder eine jeweilige weitere Anordnung als ungleichmäßige Anordnung ausgebildet ist oder dass die Ausnehmungen der oder eine jeweilige weitere Anordnung regelmäßig in Umfangsrichtung des gesamten Statorkerns angeordnet sind.

Vorzugsweise weist der erfindungsgemäße Stator einen Aufnahmeraum für einen Rotor der elektrischen Maschine auf. Darüber hinaus kann der Statorkern eine dem Aufnahmeraum zugewandte Mantelfläche aufweisen. Bevorzugt ist die Mantelfläche eine radial innere Mantelfläche des Statorkerns, welche insbesondere bei der elektrischen Maschine einen Luftspalt zwischen Stator und Rotor begrenzt.

In vorteilhafter Weiterbildung kann vorgesehen sein, dass die Ausnehmungen eine dritte Anordnung von jeweils in Umfangsrichtung aufeinander folgenden Ausnehmungen ausbilden, welche die Mantelfläche durchsetzen. Vorzugsweise entspricht die Anzahl der Ausnehmung der dritten Anordnung der Anzahl der Ausnehmungen der ersten Anordnung. Insbesondere entspricht die Anzahl der zu einer der Wicklungszonen gehörenden Ausnehmungen der ersten Anordnung der Anzahl der zu einer der Wicklungszonen gehörenden Ausnehmungen der dritten Anordnung.

Die Ausnehmungen der dritten Anordnung können Nutöffnungen des Statorkerns ausbilden, welche die Nuten mit dem Aufnahmeraum verbinden. Dadurch können offene Nuten des Stators ausgebildet werden. Alternativ können die Ausnehmungen der dritten Anordnung Pseudonutöffnungen des Statorkerns, die Sacklöcher in Radialrichtung ausbilden, ausbilden. Dabei können die Ausnehmung der zweiten Anordnung durch den Statorkern vollständig von den Nuten getrennt sein. So können geschlossene Nuten mit zugehörigen Pseudonutöffnungen ausgebildet werden, was einen besonders günstigen magnetischen Flussverlauf im Statorkern ermöglicht.

Bevorzugt sind die Ausnehmungen der dritten Anordnung an Winkelpositionen in Umfangsrichtung angeordnet, an denen sie von den Nuten überlappt werden. Dabei können die Ausnehmungen der dritten Anordnung, wenn sie die Nutöffnungen ausbilden, eine durchgängige radiale Verbindung vom Aufnahmeraum in eine jeweilige Nut ausbilden. Wenn die Ausnehmungen der dritten Anordnung die Pseudonutöffnen ausbilden, kann jede Ausnehmung der dritten Anordnung auf einer radialen Linie liegen, welche sich durch eine der Nuten erstreckt.

Es kann vorgesehen sein, dass die dritte Anordnung als ungleichmäßige Anordnung ausgebildet ist. Dadurch kann der ruhigere Betrieb auch unabhängig von einer verschobenen Gestaltung der ersten und zweiten Anordnung realisiert werden. Alternativ können die Ausnehmungen der dritten Anordnung regelmäßig in Umfangsrichtung des gesamten Statorkerns angeordnet sein.

Ferner kann vorgesehen sein, dass die Ausnehmungen einer vierten Anordnung die Mantelfläche durchsetzen. Vorzugsweise entspricht die Anzahl der Ausnehmung der vierten Anordnung der Anzahl der Ausnehmungen der ersten Anordnung und/oder der Anzahl der Ausnehmungen der dritten Anordnung. Insbesondere entspricht die Anzahl der zu einer der Wicklungszonen gehörenden Ausnehmungen der ersten Anordnung und/oder die Anzahl der zu einer der Wicklungszonen gehörenden Ausnehmungen der dritten Anordnung der Anzahl der zu einer der Wicklungszonen gehörenden Ausnehmungen der vierten Anordnung.

Mit Vorteil kann vorgesehen sein, dass die Ausnehmungen der vierten Anordnung an Winkelpositionen in Umfangsrichtung angeordnet sind, die zwischen jenen eines jeweiligen Paars benachbarter Nuten liegen. Insbesondere erstreckt sich keine radiale Linie, welche sich durch eine jeweilige der Ausnehmungen der vierten Anordnungen erstreckt, durch eine der Nuten.

Die Ausnehmungen der vierten Anordnung können Pseudonutöffnungen, die Sacklöcher in Radialrichtung ausbilden, ausbilden.

Bevorzugt ist die vierte Anordnung als ungleichmäßige Anordnung ausgebildet. Alternativ können die Ausnehmungen der vierten Anordnung regelmäßig in Umfangsrichtung des gesamten Statorkerns angeordnet sein.

Bei dem erfindungsgemäßen Stator kann ferner vorgesehen sein, dass der Statorkern für eine jeweilige Anordnung in erste bis 2·P·N-te Sektoren untergliedert ist, wobei ein jeweiliger Sektor in erste bis m-te Teilsektoren untergliedert ist, wobei m der Anzahl von Ausnehmungen der jeweiligen Anordnung entspricht, die zu einer der Wicklungszonen gehören, wobei für alle 1 ≤ j ≤ 2·P·N und alle 1 ≤ k ≤ m gilt, dass die k-te Ausnehmung, die zum j-ten Sektor gehört, derart vollständig im k-ten Teilsektor des j-ten Sektors angeordnet ist, dass die von der ersten Stirnseite aus betrachtet im Uhrzeigersinn äußere Grenze des k-ten Teilsektors eine Tangente des Rands der k-ten Ausnehmung ist. Dabei können erste bis (m-te) Zentriwinkel der ersten bis (m-1)-ten Teilsektoren dem ersten Winkelabstand entsprechen und ein m-ter Zentriwinkel des m-ten Teilsektors dem zweiten Winkelabstand entsprechen. Typischerweise sind die Sektoren, Teilsektoren und Ausnehmungen in ihrer Reihenfolge entlang der Umfangsrichtung benannt.

Bei einer ungleichmäßigen Anordnung kann der m-te Zentriwinkel unterschiedlich gegenüber den ersten bis (m-1)-ten Zentriwinkeln sein. Wenn die Ausnehmungen einer Anordnung regelmäßig in Umfangsrichtung des gesamten Statorkerns angeordnet sind, können die ersten bis m-ten Zentriwinkel identisch sein.

Die Statorwicklung ist vorzugsweise eine verteilte Statorwicklung.

Es wird bei dem erfindungsgemäßen Stator ferner bevorzugt, wenn Nuten jeweils einen Aufnahmeraum für eine vorgegebene Anzahl von Formleitern, aus denen die Statorwicklung gebildet ist, ausbilden. Durch die Formleiter kann eine sogenannte Haarnadelwicklung (engl. hairpin winding) ausgebildet werden. Die Formleiter sind bevorzugt aus gebogenen, elektrisch leitfähigen Stäben, insbesondere aus Kupfer, gebildet. Typischerweise wird eine vorgegebene Anzahl zwischen vier und zwölf Formleitern innerhalb einer jeweiligen Nut aufgenommen. Diese Anzahl von Formleitern kann eine Querschnittsfläche der Ausnehmung zu wenigstens 60 %, bevorzugt wenigstens 80 %, besonders bevorzugt wenigstens 90 %, ausfüllen. Die Formleiter haben typischerweise einen, gegebenenfalls abgerundeten, rechteckigen Querschnitt. Die Statorwicklung kann aber alternativ auch aus gewickelten Drähten, insbesondere mit einem runden Querschnitt, ausgebildet sein.

Vorzugsweise kann vorgesehen sein, dass sich die Statorwicklung in den Ausnehmungen der zweiten Anordnung weiter in Umfangsrichtung erstreckt als in den Ausnehmungen der ersten Anordnung. Insbesondere erstrecken sich die in den Ausnehmungen der zweiten Anordnung aufgenommenen Formleiter weiter in eine senkrecht zur Radialrichtung stehende Richtung als die in den Ausnehmungen der ersten Anordnung aufgenommenen Formleiter.

Die der Erfindung zugrunde liegende Aufgabe wird ferner gelöst durch eine elektrische Maschine zum Antreiben eines Fahrzeugs, umfassend einen erfindungsgemäßen Stator und einen drehbar innerhalb des Stators gelagerten Rotor. Die elektrische Maschine ist bevorzugt eine Synchronmaschine oder eine Asynchronmaschine. Der Rotor kann ein permanenterregter Rotor sein. Insbesondere ist elektrische Maschine dazu eingerichtet, einen Teil eines Antriebsstrangs des Fahrzeugs auszubilden. Bei dem Fahrzeug kann es sich um ein batterieelektrisches Fahrzeug (BEV) oder um ein Hybridfahrzeug handeln.

Weitere Vorteile und Einzelheiten der vorliegenden Erfindung ergeben sich aus den im Folgenden beschriebenen Ausführungsbeispielen sowie anhand der Zeichnung. Diese sind schematische Darstellungen und zeigen:
Weitere Vorteile und Einzelheiten der vorliegenden Erfindung ergeben sich aus den im Folgenden beschriebenen Ausführungsbeispielen sowie anhand der Zeichnung. Diese sind schematische Darstellungen und zeigen:
- Fig. 1: einen Prinzipskizze eines herkömmlichen Stators;
- Fig. 2 bis 4: jeweils einen Querschnitt eines ersten Ausführungsbeispiels des erfindungsgemäßen Stators;
- Fig. 5: einen Querschnitt eines zweiten Ausführungsbeispiels des erfindungsgemäßen Stators;
- Fig. 6: ein Querschnitt eines Ausschnitts eines dritten Ausführungsbeispiels des erfindungsgemäßen Stators; und
- Fig. 7: eine Prinzipskizze eines Fahrzeugs mit einem Ausführungsbeispiel der erfindungsgemäßen elektrischen Maschine.

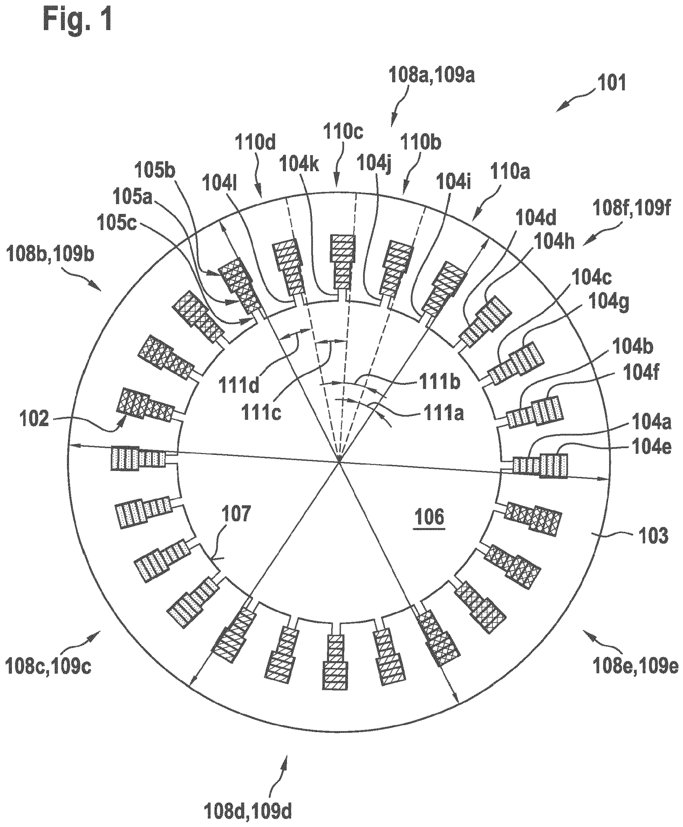

Fig. 1 ist ein Querschnitt eines herkömmlichen Stators 101.

Der Stator 101 umfasst eine N-phasige (N = 3) verteilte Statorwicklung 102, die ein Polpaar (P = 1) des Stators ausbildet, und einen Statorkern 103, in welchem eine Vielzahl von Ausnehmungen 104a-I ausgebildet sind. Die Ausnehmungen 104a-I erstrecken sich in axialer Richtung von einer ersten Stirnseite, aus deren Richtung auf den Querschnitt gemäß Fig. 1 geblickt wird, zu einer der ersten Stirnseite gegenüberliegenden zweiten Stirnseite des Statorkerns 103. Die Ausnehmungen 104a-l bilden eine erste Anordnung 105a von Ausnehmungen 104a-d und eine zweite Anordnung 105b von Ausnehmungen 104e-h aus. Eine jeweilige Ausnehmung 104a-d der ersten Anordnung 105a bildet zusammenhängend mit einer Ausnehmung 104e-h der zweiten Anordnung 105b eine Nut des Statorkerns 103 aus. Dabei sind die Ausnehmungen 104a-d der ersten Anordnung 105a radial weiter innen als die Ausnehmungen 104e-h der zweiten Anordnung 105b angeordnet und weisen eine geringere Erstreckung in Umfangsrichtung als die Ausnehmungen 104e-h der zweiten Anordnung 105b auf. Die Nuten nehmen die Statorwicklung 102 auf. Außerdem bilden die Ausnehmungen 104a-I eine dritte Anordnung 105c von Ausnehmungen 104i-I aus. Die Ausnehmungen 104i-I bilden Nutöffnungen aus, welche die Ausnehmungen 104a-d der ersten Anordnung 105a mit einem Aufnahmeraum 106 für einen Rotor verbinden, indem sie eine innere Mantelfläche 107 des Statorkerns 103 durchsetzen.

Der Statorkern ist in sechs (2·P·N) gleichmäßig in Umfangsrichtung aufeinanderfolgende Wicklungszonen 108a-f untergliedert. Von den Ausnehmungen 104a-d, 104d-h, 104i-I einer jeweiligen Anordnung 105a, 105b, 105c gehören jeweils m = 4 Ausnehmungen zu einer der Wicklungszonen 108a-f.

Bei der ersten Anordnung 105a weist jedes Paar von in Umfangsrichtung benachbarten Ausnehmungen 104a-d, die zur selben Wicklungszone 108a-f gehören, einen ersten Winkelabstand 111a-c in Umfangsrichtung zueinander auf. Außerdem weist jedes Paar von in Umfangsrichtung benachbarten Ausnehmungen 104a, 104d, die zu verschiedenen Wicklungszonen 108a-f gehören, einen zweiten Winkelabstand 111d in Umfangsrichtung zueinander auf. Die ersten und zweiten Winkelabstände sind identisch, sodass die Ausnehmungen 104a-d regelmäßig in Umfangsrichtung des gesamten Statorkerns 103 angeordnet sind.

Somit lässt sich der Statorkern 103 für die erste Anordnung 105a in erste bis sechste (2·P·N-te) Sektoren 109a-f, die in Fig. 1 durch durgezogene radiale Pfeile dargestellt sind, untergliedern. Ein jeweiliger Sektor 109a-f ist wiederum in erste bis vierte (m-te) Teilsektoren 110a-d untergliedert, die in Fig. 1 für den ersten Sektor 109a durch gestrichelte radiale Linien dargestellt sind. Für alle 1 ≤ j ≤ 6 = 2·P·N und alle 1 ≤ k ≤ m = 4 gilt, dass die die k-te Ausnehmung 104a-d, die zum j-ten Sektor 109a-f gehört, derart vollständig im k-ten Teilsektor 110a-d des j-ten Sektors 109a-f angeordnet ist, dass die von der ersten Stirnseite aus betrachtet im Uhrzeigersinn äußere Grenze des k-ten Teilsektors 110a-d eine Tangente des Rands der k-ten Ausnehmung 104a-d ist. Dabei entsprechen Zentriwinkel eines jeweiligen Teilsektors 110a-d den ersten und zweiten Winkelabständen 111a-d und sind identisch, sodass alle Ausnehmungen 104a-d an äquidistanten Positionen in Umfangsrichtung angeordnet sind.

Analog dazu sind auch die Ausnehmungen 104e-h der zweiten Anordnung 105b und die Ausnehmungen 104i-I der dritten Anordnung 105c regelmäßig in Umfangsrichtung des Statorkerns 103 angeordnet.

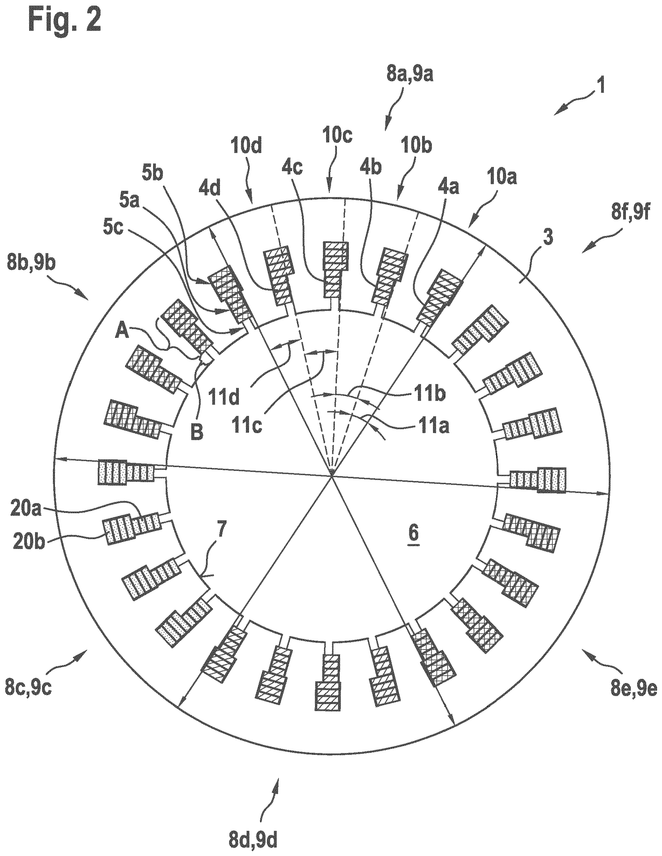

Fig. 2 bis Fig. 4 sind jeweils ein Querschnitt eines ersten Ausführungsbeispiels eines Stators 1.

Der Stator 1 umfasst eine N-phasige (N = 3) verteilte Statorwicklung 2, die ein Polpaar (P = 1) des Stators 1 ausbildet, und einen Statorkern 3, in welchem eine Vielzahl von Ausnehmungen 4a-l, die sich in axialer Richtung von einer ersten Stirnseite, aus deren Richtung auf den Querschnitt gemäß Fig. 2 geblickt wird, zu einer der ersten Stirnseite gegenüberliegenden zweiten Stirnseite des Statorkerns 3 erstrecken, ausgebildet sind. Die Ausnehmungen 4a-h bilden eine erste Anordnung 5a von Ausnehmungen 4a-d und eine zweite Anordnung 5b von Ausnehmungen 4e-h aus. Eine jeweilige Ausnehmung 4a-d der ersten Anordnung 5a bildet zusammenhängend mit einer Ausnehmung 4e-h der zweiten Anordnung 5b eine Nut A des Statorkerns 3 aus. Dabei sind die Ausnehmungen 4a-d der ersten Anordnung 5a radial weiter innen als die Ausnehmungen 4e-h der zweiten Anordnung 5b angeordnet und weisen eine geringere Erstreckung in Umfangsrichtung als die Ausnehmungen 4e-h der zweiten Anordnung 5b auf. Die Nuten A nehmen die Statorwicklung 102 auf. Außerdem bilden die Ausnehmungen 4a-l eine dritte Anordnung 5c von Ausnehmungen 4i-I aus. Die Ausnehmungen 4i-I bilden Nutöffnungen B aus, welche die Ausnehmungen 4a-d der ersten Anordnung 5a mit einem Aufnahmeraum 6 für einen Rotor 52 (vgl. Fig. 11) verbinden, indem sie eine innere Mantelfläche 7 des Statorkerns 3 durchsetzen.

Der Statorkern ist in sechs (2·P·N) gleichmäßig in Umfangsrichtung aufeinanderfolgende Wicklungszonen 8a-f untergliedert. Von den Ausnehmungen 4a-d, 4d-h, 4i-l einer jeweiligen Anordnung 5a, 5b, 5c gehören jeweils m = 4 Ausnehmungen zu einer der Wicklungszonen 8a-f.

Bei der ersten Anordnung 5a weist jedes Paar von in Umfangsrichtung benachbarten Ausnehmungen 4a-d, die zur selben Wicklungszone 8a-f gehören, einen ersten Winkelabstand 11a-c in Umfangsrichtung zueinander auf. Außerdem weist jedes Paar von in Umfangsrichtung benachbarten Ausnehmungen 4a, 4d, die zu verschiedenen Wicklungszonen 8a-f gehören, einen zweiten Winkelabstand 11d in Umfangsrichtung zueinander auf. Der erste Winkelabstand 11a-c und der zweite Winkelabstand 11d sind unterschiedlich, sodass die erste Anordnung 5a als ungleichmäßige Anordnung ausgebildet ist.

Im vorliegenden Ausführungsbeispiel ist der zweite Winkelabstand 11d kleiner als der erste Winkelabstand 11a-c. Die ersten Winkelabstände 11a-c der Paare von in Umfangsrichtung benachbarten, zur selben Wicklungszone 8a-f gehörenden Ausnehmungen 4a-d sind identisch. Ein jeweiliger erster Winkelabstand 11a-c ist größer als 360°/(2·P·N·m), wohingegen der zweite Winkelabstand 11d kleiner als 360°/(2·P·N·m) ist.

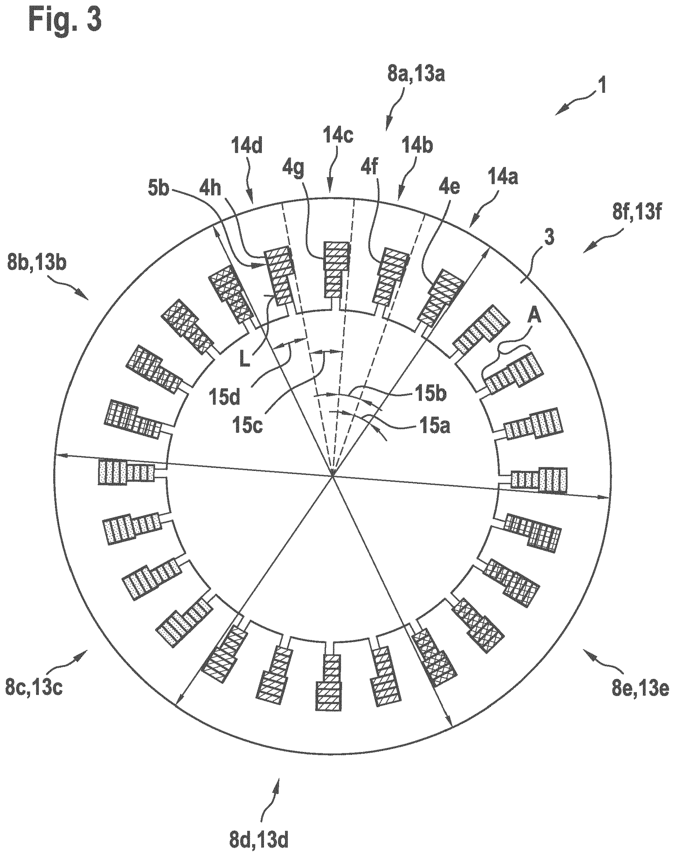

Wie in Fig. 3 im Detail dargestellt weist bei der zweiten Anordnung 5b jedes Paar von in Umfangsrichtung benachbarten Ausnehmungen 4e-h, die zur selben Wicklungszone 8a-f gehören, einen ersten Winkelabstand 15a-c in Umfangsrichtung zueinander auf. Außerdem weist jedes Paar von in Umfangsrichtung benachbarten Ausnehmungen 4e, 4h, die zu verschiedenen Wicklungszonen 8a-f gehören, einen zweiten Winkelabstand 15d in Umfangsrichtung zueinander auf. Der erste Winkelabstand 15a-c und der zweite Winkelabstand 11d sind identisch, sodass die Ausnehmungen 4e-h regelmäßig in Umfangsrichtung des gesamten Statorkerns 3 angeordnet sind. Ein jeweiliger Winkelabstand 15a-d entspricht dabei 360°/(2·P·N·m).

Ersichtlich ist der zweite Winkelabstand 11d (siehe Fig. 2) derart gewählt, dass die Ausnehmungen 4d, 4h, welche benachbart zu einer anderen Wicklungszone 8a-f liegen, eine gerade, sich im Wesentlichen in Radialrichtung erstreckende Randlinie L der Nut A ausbilden.

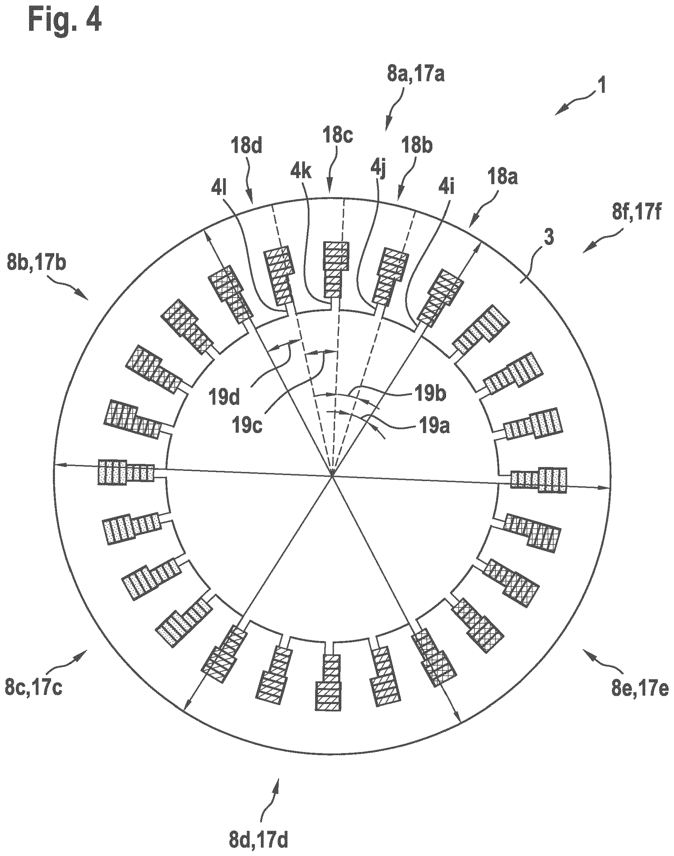

Wie in Fig. 4 im Detail dargestellt weist bei der dritten Anordnung 5c jedes Paar von in Umfangsrichtung benachbarten Ausnehmungen 4i-l, die zur selben Wicklungszone 8a-f gehören, einen ersten Winkelabstand 19a-c in Umfangsrichtung zueinander auf. Außerdem weist jedes Paar von in Umfangsrichtung benachbarten Ausnehmungen 4e, 4h, die zu verschiedenen Wicklungszonen 8a-f gehören, einen zweiten Winkelabstand 19d in Umfangsrichtung zueinander auf. Der erste Winkelabstand 19a-c und der zweite Winkelabstand 19d sind identisch, sodass die Ausnehmungen 4i-I regelmäßig in Umfangsrichtung des gesamten Statorkerns 3 angeordnet sind. Ein jeweiliger Winkelabstand 19a-d entspricht dabei 360°/(2·P·N·m).

Außerdem entsprechen im ersten Ausführungsbeispiel die ersten und zweiten Winkelabstände 15a-d der zweiten Anordnung 5b den ersten und zweiten Winkelabständen 19a-d der dritten Anordnung 5c, sodass die durch die Ausnehmungen 4i-l ausgebildeten Nutöffnungen B an identischen Relativpositionen zu den radial äußeren Teil der Nuten A ausbildenden Ausnehmungen 4e-h liegen.

Somit lässt sich der Statorkern 3 für die erste Anordnung 5a in erste bis sechste (2·P·N-te) Sektoren 9a-f, die in Fig. 2 durch durgezogene radiale Pfeile dargestellt sind, untergliedern. Ein jeweiliger Sektor 9a-f ist wiederum in erste bis vierte (m-te) Teilsektoren 10a-d untergliedert, die in Fig. 2 für den ersten Sektor 9a durch gestrichelte radiale Linien dargestellt sind. Für alle 1 ≤ j ≤ 6 = 2·P·N und alle 1 ≤ k ≤ m = 4 gilt, dass die die k-te Ausnehmung 4a-d, die zum j-ten Sektor 9a-f gehört, derart vollständig im k-ten Teilsektor 10a-d des j-ten Sektors 9a-f angeordnet ist, dass die von der ersten Stirnseite aus betrachtet im Uhrzeigersinn äußere Grenze des k-ten Teilsektors 10a-d eine Tangente des Rands der k-ten Ausnehmung 4a-d ist. Dabei entsprechen erste bis dritte [(m-1)-te] Zentriwinkel der ersten bis dritten [(m-1)-ten)] Teilsektoren 10a-c den ersten Winkelabständen 11a-c und sind identisch. Die ersten bis dritten [(m-1)-ten] Zentriwinkel einerseits und ein vierter (m-ter), dem zweiten Winkelabstand 11d entsprechender Zentriwinkel eines vierten (m-ten) Teilsektors 10d andererseits sind unterschiedlich. Im vorliegenden Ausführungsbeispiel ist der vierte Zentriwinkel kleiner als ein jeweiliger der ersten bis dritten Zentriwinkel.

Ferner lässt sich der Statorkern 3 für die zweite Anordnung 5b in erste bis sechste (2·P·N-te) Sektoren 13a-f, die in Fig. 3 durch durgezogene radiale Pfeile dargestellt sind, untergliedern. Ein jeweiliger Sektor 13a-f ist wiederum in erste bis vierte (m-te) Teilsektoren 14a-d untergliedert, die in Fig. 3 für den ersten Sektor 13a durch gestrichelte radiale Linien dargestellt sind. Für alle 1 ≤ j ≤ 6 = 2·P·N und alle 1 ≤ k ≤ m = 4 gilt, dass die die k-te Ausnehmung 4e-h, die zum j-ten Sektor 13a-f gehört, derart vollständig im k-ten Teilsektor 14a-d des j-ten Sektors 13a-f angeordnet ist, dass die von der ersten Stirnseite aus betrachtet im Uhrzeigersinn äußere Grenze des k-ten Teilsektors 14a-d eine Tangente des Rands der k-ten Ausnehmung 4e-h ist. Dabei entsprechen erste bis dritte [(m-1)-te] Zentriwinkel der ersten bis dritten [(m-1)-ten)] Teilsektoren 14a-c und sind identisch. Die ersten bis dritten Zentriwinkel und ein vierter (m-ter), dem zweiten Winkelabstand 15d entsprechender Zentriwinkel sind identisch.

Ferner lässt sich der Statorkern 3 für die dritte Anordnung 5b in erste bis sechste (2·P·N-te) Sektoren 17a-f, die in Fig. 4 durch durgezogene radiale Pfeile dargestellt sind, untergliedern. Ein jeweiliger Sektor 17a-f ist wiederum in erste bis vierte (m-te) Teilsektoren 18a-d untergliedert, die in Fig. 4 für den ersten Sektor 17a durch gestrichelte radiale Linien dargestellt sind. Für alle 1 ≤ j ≤ 6 = 2·P·N und alle 1 ≤ k ≤ m = 4 gilt, dass die k-te Ausnehmung 4i-l, die zum j-ten Sektor 17a-f gehört, derart vollständig im k-ten Teilsektor 18a-d des j-ten Sektors 17a-f angeordnet ist, dass die von der ersten Stirnseite aus betrachtet im Uhrzeigersinn äußere Grenze des k-ten Teilsektors 18a-d eine Tangente des Rands der k-ten Ausnehmung 4i-I ist. Dabei entsprechen erste bis dritte [(m-1)-te] Zentriwinkel der ersten bis dritten [(m-1)-ten)] Teilsektoren 14a-c den ersten Winkelabständen 19a-c und sind identisch. Die ersten bis dritten Zentriwinkel und ein vierter (m-ter), dem zweiten Winkelabstand 19d entsprechender Zentriwinkel sind identisch.

Außerdem entsprechen im vorliegenden Ausführungsbeispiel die Zentriwinkel der zweiten Anordnung 5b den Zentriwinkeln der dritten Anordnung 5c.

Der Stator 1 weist eine Lochzahl von vier (m = 4) auf, wobei die Lochzahl der Anzahl der zu einer jeweiligen Wicklungszone 8a-f gehörenden Ausnehmungen 4a-d, 4e-h, 4i-I einer jeweiligen Anordnung 5a, 5b, 5c entspricht.

Exemplarisch ist die Statorwicklung 2 durch eine Vielzahl von Formleitern 16 (siehe Fig. 2) ausgebildet, so dass die Statorwicklung 2 eine Haarnadelwicklung ist. In jeder Ausnehmung 4a-d, 4e-h der ersten und zweiten Anordnungen 5a sind beispielsweise jeweils vier Formleiter 16, also acht Formleiter 16 je Nut A, angeordnet.

Im Folgenden werden weitere Ausführungsbeispiele eines Stators 1 beschrieben, die bis auf die nachfolgend beschriebenen Abweichungen dem Stator 1 gemäß dem ersten Ausführungsbeispiel entsprechen. Dabei sind gleiche oder gleichwirkende Komponenten mit identischen Bezugszeichen versehen.

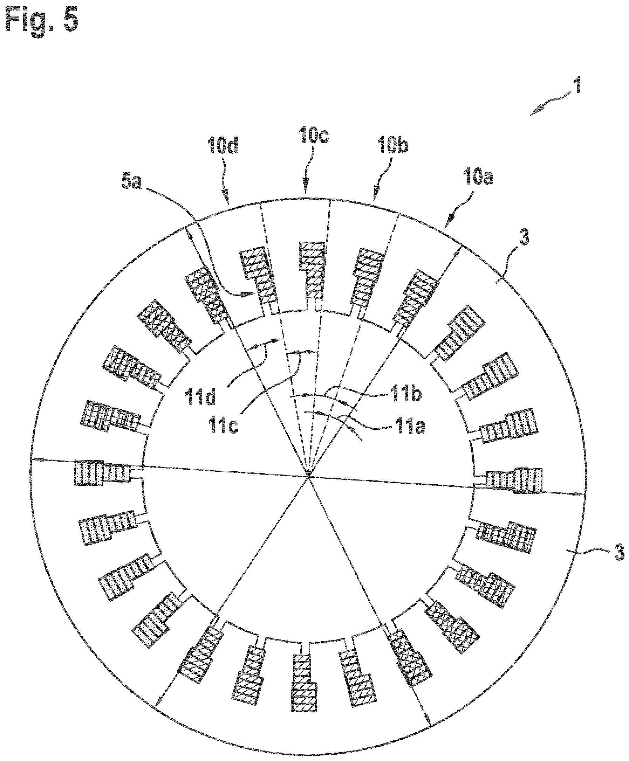

Fig. 5 ist ein Querschnitt eines zweiten Ausführungsbeispiels eines Stators 1.

Gemäß dem zweiten Ausführungsbeispiel ist bei der ersten Anordnung 5a der zweite Winkelabstand 11d größer als der erste Winkelabstand 11a-c. Ein jeweiliger erster Winkelabstand 11a-c ist kleiner als 360°/(2·P·N·m), wohingegen der zweite Winkelabstand 11d größer als 360°/(2·P·N·m) ist. Außerdem ist bei der ersten Anordnung 5a der vierte (m-te) Zentriwinkel des vierten Teilsektors 10d größer als ein jeweiliger der ersten bis dritten [(m-1)-ten] Zentriwinkel der ersten bis dritten [(m-1)-ten] Teilsektoren 10a-c.

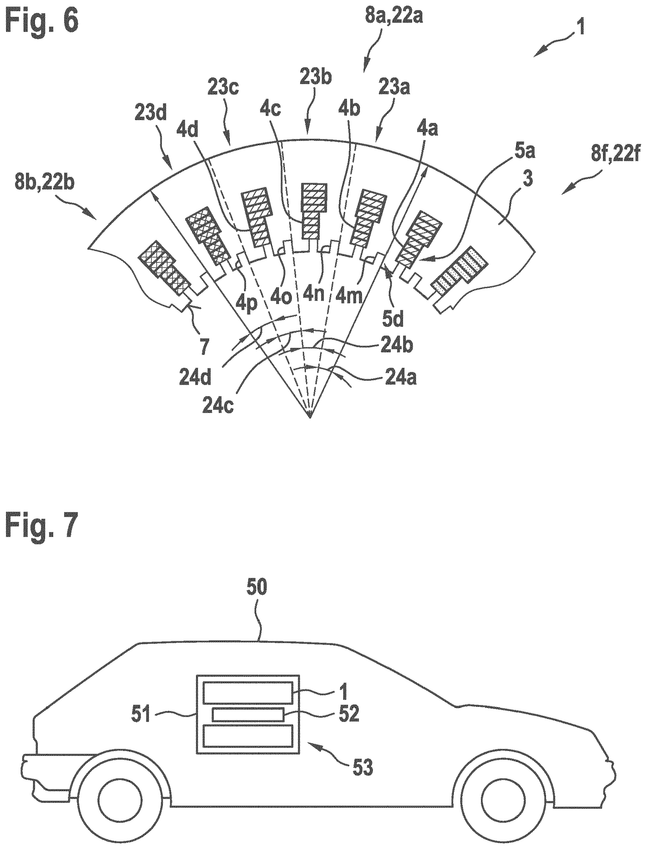

Fig. 6 ist ein Querschnitt eines Ausschnitts eines dritten Ausführungsbeispiels eines Stators 1 mit einem dritten Ausführungsbeispiel eines Statorkerns 3.

Gemäß dem dritten Ausführungsbeispiel ist eine vierte Anordnung 5d von Ausnehmungen 4m-p vorgesehen. Die Ausnehmungen 4m-p der vierten Anordnung 5c sind als Pseudonutöffnungen ausgebildet sind, welche die Mantelfläche 7 durchsetzen, und an Positionen in Umfangsrichtung angeordnet sind, die zwischen jenen eines jeweiligen Paars benachbarter Ausnehmungen 4a-d der ersten Anordnung 5a liegen.

Bei der vierten Anordnung 5d weist jedes Paar von in Umfangsrichtung benachbarten Ausnehmungen 4m-p, die zur selben Wicklungszone 8a-f gehören, einen ersten Winkelabstand 24a-c in Umfangsrichtung zueinander auf. Außerdem weist jedes Paar von in Umfangsrichtung benachbarten Ausnehmungen 4m, 4p, die zu verschiedenen Wicklungszonen 8a-f gehören, einen zweiten Winkelabstand 24d in Umfangsrichtung zueinander auf. Der erste Winkelabstand 24a-c und der zweite Winkelabstand 24d sind unterschiedlich, sodass die vierte Anordnung 5d als ungleichmäßige Anordnung ausgebildet ist.

Dabei ist der zweite Winkelabstand 24d im vorliegenden Ausführungsbeispiel kleiner als der erste Winkelabstand 24a-c. Die ersten Winkelabstände 24a-c der Paare von in Umfangsrichtung benachbarten Ausnehmungen 4m-p, die zur selben Wicklungszone 8a-f gehören, sind dabei identisch. Ein jeweiliger erster Winkelabstand 24a-c ist größer als 360°/(2·P·N·m), wohingegen der zweite Winkelabstand 24d kleiner als 360°/(2·P·N·m) ist.

Somit lässt sich der Statorkern 3 für die vierte Anordnung 5d in erste bis sechste (2·P·N-te) Sektoren 22a-f, von denen in Fig. 6 nur die Sektoren 22a, 22b, 22f dargestellt sind, untergliedern. Ein jeweiliger Sektor 22a-f ist wiederum in erste bis vierte (m-te) Teilsektoren 23a-d untergliedert, die in Fig. 2 für den ersten Sektor 22a durch gestrichelte radiale Linien dargestellt sind. Für alle 1 ≤ j ≤ 6 = 2·P·N und alle 1 ≤ k ≤ m = 4 gilt, dass die die k-te Ausnehmung 4m-p, die zum j-ten Sektor 22a-f gehört, derart vollständig im k-ten Teilsektor 23a-d des j-ten Sektors 22a-f angeordnet ist, dass die von der ersten Stirnseite aus betrachtet im Uhrzeigersinn äußere Grenze des k-ten Teilsektors 23a-d eine Tangente des Rands der k-ten Ausnehmung 4m-p ist. Dabei entsprechen erste bis dritte [(m-1)-te] Zentriwinkel der ersten bis dritten [(m-1)-ten)] Teilsektoren 23a-c den ersten Winkelabständen 24a-c und identisch. Die ersten bis dritten [(m-1)-ten] Zentriwinkel einerseits und ein vierter (m-ter), dem zweiten Winkelabstand 24d entsprechender Zentriwinkel, eines vierten (m-ten) Teilsektors 23d andererseits sind unterschiedlich. Im vorliegenden Ausführungsbeispiel ist der vierte Zentriwinkel kleiner als ein jeweiliger der die ersten bis dritten Zentriwinkel.

Gemäß einem weiteren Ausführungsbeispiel, welches einem der zuvor beschriebenen Ausführungsbeispiele entspricht, sind die Nuten als geschlossene Nuten ausgebildet, die durch den Statorkern 3 vom Aufnahmeraum 6 getrennt sind. Ferner bilden die Ausnehmungen 4i-I der dritten Anordnung 5c als Sacklöcher ausgebildete Pseudonutöffnungen aus.

Gemäß weiteren Ausführungsbeispielen ist bzw. sind die zweite Anordnung 5b als ungleichmäßige Anordnung ausgebildet und/oder die dritte Anordnung 5c als ungleichmäßige Anordnung ausgebildet.

Fig. 7 ist eine Prinzipskizze eines Fahrzeugs 50 mit einem Ausführungsbeispiel einer elektrischen Maschine 51.

Die elektrische Maschine 51 weist einen Stator 1 gemäß einem der zuvor beschriebenen Ausführungsbeispiele und einen drehbar innerhalb des Stators 1 gelagerten Rotor 52 auf. Die elektrische Maschine 51 ist als, insbesondere permanenterregte, Synchronmaschine oder als Asynchronmaschine ausgebildet und dazu eingerichtet, das Fahrzeug 50 anzutreiben. Die elektrische Maschine 51 ist insoweit Teil eines Antriebsstrangs 53 des Fahrzeugs 50. Das Fahrzeug 50 ist ein batterieelektrisches Fahrzeug (BEV) oder ein Hybridfahrzeug.

## Patentansprüche

1. Stator (1) für eine elektrische Maschine (51), wobei
- der Stator (1) eine Statorwicklung (2) mit einer Anzahl N Phasenwicklungen, eine Anzahl P Polpaare und einen Statorkern (3), in dem Nuten (A) ausgebildet sind, wobei die Statorwicklung (2) in den Nuten (A) angeordnet ist, aufweist;
wobei
- der Statorkern (3) in 2·P·N gleichmäßig in Umfangsrichtung aufeinander folgende Wicklungszonen (8a-f) untergliedert ist; wobei
- der Statorkern (3) eine Vielzahl von Ausnehmungen (4a-I), die sich in axialer Richtung von einer ersten Stirnseite des Statorkerns (3) zu einer der ersten Stirnseite gegenüberliegenden zweiten Stirnseite des Statorkerns (3) erstrecken, aufweist;
- die Ausnehmungen (4a-p) zumindest eine erste Anordnung (5a) und eine zweite Anordnung (5b) von jeweils in Umfangsrichtung aufeinander folgenden Ausnehmungen (4a-d, 4e-f) ausbilden; wobei
- bei jeder Anordnung (5a-d) wenigstens zwei Ausnehmungen (4a-d, 4e-h, 4i-I, 4m-p) zu einer der Wicklungszonen (8a-f) gehören; wobei
- bei jeder Anordnung (5a-d) jedes Paar von in Umfangsrichtung benachbarten Ausnehmungen (4a-d, 4e-h, 4i-I, 4m-p), die zur selben Wicklungszone (8a-f) gehören, einen ersten Winkelabstand (11a-c, 15a-c, 19a-c, 24a-c) in Umfangsrichtung zueinander aufweist; wobei
- bei jeder Anordnung (5a-d) jedes Paar von in Umfangsrichtung benachbarten Ausnehmungen (4a, 4d, 4e, 4h, 4i, 4l, 4m, 4p), die zu verschiedenen Wicklungszonen (8a-f) gehören, einen zweiten Winkelabstand (11d, 15d, 19d, 24d) in Umfangsrichtung zueinander aufweist;
wobei
- jede Ausnehmung (4a-d) der ersten Anordnung (5a) mit einer Ausnehmung (4e-h) der zweiten Anordnung (5b) zusammenhängend eine Nut (A) des Statorkerns (3) ausbildet, die Ausnehmung (4a-d) der ersten Anordnung (5a) radial weiter innen als die Ausnehmung (4e-h) der zweiten Anordnung (5b) angeordnet ist und die Ausnehmung (4e-h) einer der ersten und zweiten Anordnungen (5b) eine größere Ausdehnung in Umfangsrichtung aufweist als die Ausnehmung (4a-d) der anderen der ersten und zweiten Anordnungen (5a); wobei
- bei mindestens einer Anordnung (5a-d) der erste Winkelabstand (11a-c, 15a-c, 19a-c, 24a-c) und der zweite Winkelabstand (11d, 15d, 19d, 24d) unterschiedlich sind, sodass die Anordnung (5a-d) als ungleichmäßige Anordnung ausgebildet ist.

2. Statorkern nach Anspruch 1, wobei
die Ausnehmungen (4e-h) der zweiten Anordnung (5b) eine größere Ausdehnung in Umfangsrichtung als die Ausnehmungen (4a-d) der ersten Anordnung (5a) aufweisen.

3. Statorkern nach Anspruch 1 oder 2, wobei
- die erste Anordnung (5a) und die zweite Anordnung (5b) als ungleichmäßige Anordnung ausgebildet sind oder
- die erste Anordnung (5a) als ungleichmäßige Anordnung ausgebildet ist und die Ausnehmungen (4e-h) der zweiten Anordnung (5b) regelmäßig in Umfangsrichtung des gesamten Statorkerns (3) angeordnet sind oder
- die zweite Anordnung (5b) als ungleichmäßige Anordnung ausgebildet ist und die Ausnehmungen (4a-d) der ersten Anordnung (5a) regelmäßig in Umfangsrichtung des gesamten Statorkerns (3) angeordnet sind oder
- die Ausnehmungen (4a-d, 4e-h) der ersten Anordnung (5a) und der zweiten Anordnung (5b) regelmäßig in Umfangsrichtung des gesamten Statorkerns (3) angeordnet sind.

4. Statorkern nach einem der vorhergehenden Ansprüche, wobei der Statorkern (3) einen Aufnahmeraum (6) für einen Rotor (52) der elektrischen Maschine (51) und eine dem Aufnahmeraum (6) zugewandte Mantelfläche (7) aufweist.

5. Statorkern nach Anspruch 4, wobei
die Ausnehmungen (4a-p) eine dritte Anordnung (5c) von jeweils in Umfangsrichtung aufeinander folgenden Ausnehmungen (4i-I) ausbilden, welche die Mantelfläche (7) durchsetzen.

6. Stator nach Anspruch 5, wobei
die Ausnehmungen (4i-I) der dritten Anordnung (5c) Nutöffnungen (B) des Statorkerns (3), welche die Nuten (A) mit dem Aufnahmeraum (6) verbinden, oder Pseudonutöffnungen des Statorkerns (3), die Sacklöcher in Radialrichtung ausbilden, ausbilden.

7. Stator nach Anspruch 5 oder 6, wobei
die Ausnehmungen (4i-I) der dritten Anordnung (5c) an Winkelpositionen in Umfangsrichtung angeordnet sind, an denen sie von den Nuten (A) überlappt werden.

8. Stator nach einem der Ansprüche 5 bis 7, wobei
die dritte Anordnung (5c) als ungleichmäßige Anordnung ausgebildet ist.

9. Stator nach einem der Ansprüche 5 bis 7, wobei
die Ausnehmungen der dritten Anordnung (5b) regelmäßig in Umfangsrichtung des gesamten Statorkerns (3) angeordnet sind.

10. Stator nach einem der Ansprüche 4 bis 9, wobei
die Ausnehmungen (4a-p) eine vierte Anordnung (5d) von jeweils in Umfangsrichtung aufeinander folgenden Ausnehmungen (4m-p) ausbilden, welche die Mantelfläche (7) durchsetzen.

11. Stator nach Anspruch 10, wobei
die Ausnehmungen (4m-p) der vierten Anordnung (5d) an Winkelpositionen in Umfangsrichtung angeordnet sind, die zwischen jenen eines jeweiligen Paars benachbarter Nuten (A) liegen.

12. Stator nach Anspruch 10 oder 11, wobei
die Ausnehmungen der vierten Anordnung (5d) Pseudonutöffnungen (C), die Sacklöcher in Radialrichtung ausbilden, ausbilden.

13. Stator nach einem der Ansprüche 10 bis 12, wobei
die vierte Anordnung (5d) als ungleichmäßige Anordnung ausgebildet ist.

14. Stator nach einem der Ansprüche 10 bis 12, wobei
die Ausnehmungen (4m-p) der vierten Anordnung (5d) regelmäßig in Umfangsrichtung des gesamten Statorkerns (3) angeordnet sind.

15. Elektrische Maschine (51) zum Antreiben eines Fahrzeugs (50), umfassend einen Stator (1) nach einem der vorhergehenden Ansprüche und einen drehbar innerhalb des Stators (1) gelagerten Rotor (52).

## Claims

1. Stator (1) for an electric machine (51), wherein
- the stator (1) has a stator winding (2) with a number N of phase windings, has a number P of pole pairs, and has a stator core (3) in which slots (A) are formed, wherein the stator winding (2) is arranged in the slots (A); wherein
- the stator core (3) is subdivided into 2·P·N winding zones (8a-f) which follow one another in a circumferential direction in a uniform manner; wherein
- the stator core (3) has a multiplicity of cutouts (4a-l) which extend in an axial direction from a first end face of the stator core (3) to a second end face of the stator core (3), which is situated opposite the first end face;
- the cutouts (4a-p) form at least a first arrangement (5a) and a second arrangement (5b) of cutouts (4a-d, 4e-f) which in each case follow one another in the circumferential direction; wherein,
- in each arrangement (5a-d), at least two cutouts (4a-d, 4e-h, 4i-l, 4m-p) belong to one of the winding zones (8a-f); wherein,
- in each arrangement (5a-d), each pair of cutouts (4a-d, 4e-h, 4i-l, 4m-p) situated adjacently in the circumferential direction and belonging to the same winding zone (8a-f) have a first angular spacing (11a-c, 15a-c, 19a-c, 24a-c) to one another in the circumferential direction; wherein,
- in each arrangement (5a-d), each pair of cutouts (4a, 4d, 4e, 4h, 4i, 41, 4m, 4p) situated adjacently in the circumferential direction and belonging to different winding zones (8a-f) have a second angular spacing (11d, 15d, 19d, 24d) to one another in the circumferential direction;
wherein
- each cutout (4a-d) of the first arrangement (5a) contiguously forms together with a cutout (4e-h) of the second arrangement (5b) a slot (A) in the stator core (3), the cutout (4a-d) of the first arrangement (5a) is arranged radially further to the inside than the cutout (4e-h) of the second arrangement (5b), and the cutout (4e-h) of one of the first and second arrangements (5b) has a greater extent in the circumferential direction than the cutout (4a-d) of the other one of the first and second arrangements (5a); wherein,
- in at least one arrangement (5a-d), the first angular spacing (11a-c, 15a-c, 19a-c, 24a-c) and the second angular spacing (11d, 15d, 19d, 24d) are different, so that the arrangement (5a-d) is formed as a non-uniform arrangement.

2. Stator core according to Claim 1, wherein
the cutouts (4e-h) of the second arrangement (5b) have a greater extent in the circumferential direction than the cutouts (4a-d) of the first arrangement (5a).

3. Stator core according to Claim 1 or 2, wherein
- the first arrangement (5a) and the second arrangement (5b) are formed as a non-uniform arrangement, or
- the first arrangement (5a) is formed as a non-uniform arrangement and the cutouts (4e-h) of the second arrangement (5b) are arranged in a regular manner in the circumferential direction of the complete stator core (3), or
- the second arrangement (5b) is formed as a non-uniform arrangement and the cutouts (4a-d) of the first arrangement (5a) are arranged in a regular manner in the circumferential direction of the complete stator core (3), or
- the cutouts (4a-d, 4e-h) of the first arrangement (5a) and of the second arrangement (5b) are arranged in a regular manner in the circumferential direction of the complete stator core (3).

4. Stator core according to one of the preceding claims, wherein
the stator core (3) has a receiving space (6) for a rotor (52) of the electric machine (51) and has a lateral surface (7) which faces towards the receiving space (6).

5. Stator core according to Claim 4, wherein
the cutouts (4a-p) form a third arrangement (5c) of cutouts (4i-l) which in each case follow one another in the circumferential direction and which extend through the lateral surface (7).

6. Stator according to Claim 5, wherein
the cutouts (4i-l) of the third arrangement (5c) form slot openings (B) in the stator core (3), which connect the slots (A) to the receiving space (6), or pseudo slot openings in the stator core (3), which form blind holes in the radial direction.

7. Stator according to Claim 5 or 6, wherein
the cutouts (4i-l) of the third arrangement (5c) are arranged at angular positions in the circumferential direction at which the slots (A) overlap them.

8. Stator according to one of Claims 5 to 7, wherein the third arrangement (5c) is formed as a non-uniform arrangement.

9. Stator according to one of Claims 5 to 7, wherein the cutouts of the third arrangement (5b) are arranged in a regular manner in the circumferential direction of the complete stator core (3).

10. Stator according to one of Claims 4 to 9, wherein the cutouts (4a-p) form a fourth arrangement (5d) of cutouts (4m-p) which in each case follow one another in the circumferential direction and which extend through the lateral surface (7).

11. Stator according to Claim 10, wherein
the cutouts (4m-p) of the fourth arrangement (5d) are arranged at angular positions in the circumferential direction that are between those angular positions of a respective pair of adjacent slots (A).

12. Stator according to Claim 10 or 11, wherein
the cutouts of the fourth arrangement (5d) form pseudo slot openings (C), which form blind holes in the radial direction.

13. Stator according to one of Claims 10 to 12, wherein the fourth arrangement (5d) is formed as a non-uniform arrangement.

14. Stator according to one of Claims 10 to 12, wherein the cutouts (4m-p) of the fourth arrangement (5d) are arranged in a regular manner in the circumferential direction of the complete stator core (3).

15. Electric machine (51) for driving a vehicle (50), comprising a stator (1) according to one of the preceding claims and a rotor (52) which is mounted rotatably within the stator (1).

## Revendications

1. Stator (1) pour une machine électrique (51), dans lequel
- le stator (1) présente un enroulement de stator (2) muni d'un nombre N d'enroulements de phase, d'un nombre P de paires de pôles et d'un noyau de stator (3) dans lequel des encoches (A) sont réalisées, l'enroulement de stator (2) étant disposé dans les encoches (A) ; dans lequel
- le noyau de stator (3) est subdivisé en 2·P·N zones d'enroulement (8a-f) qui se suivent régulièrement dans la direction circonférentielle ; dans lequel
- le noyau de stator (3) présente une pluralité d'évidements (4a-l) qui s'étend dans la direction axiale d'une première face frontale du noyau de stator (3) à une deuxième face frontale du noyau de stator (3), opposée à la première face frontale ;
- les évidements (4a-p) réalisent au moins un premier agencement (5a) et un deuxième agencement (5b) d'évidements (4a-d, 4e-f) qui se suivent respectivement dans la direction circonférentielle ; dans lequel
- dans chaque agencement (5a-d), au moins deux évidements (4a-d, 4e-h, 4i-l, 4m-p) appartiennent à l'une des zones d'enroulement (8a-f) ; dans lequel
- dans chaque agencement (5a-d), chaque paire d'évidements (4a-d, 4e-h, 4i-l, 4m-p) voisins dans la direction circonférentielle et appartenant à la même zone d'enroulement (8a-f) présente une première distance angulaire (11a-c, 15a-c, 19a-c, 24a-c) l'un par rapport à l'autre dans la direction circonférentielle ; dans lequel
- dans chaque agencement (5a-d), chaque paire d'évidements (4a, 4d, 4e, 4h, 4i, 41, 4m, 4p) voisins dans la direction circonférentielle et appartenant à différentes zones d'enroulement (8a-f) présente une deuxième distance angulaire (11d, 15d, 19d, 24d) l'un par rapport à l'autre dans la direction circonférentielle ; dans lequel
- chaque évidement (4a-d) du premier agencement (5a) réalise avec un évidement (4e-h) du deuxième agencement (5b) de manière cohérente une encoche (A) du noyau de stator (3), l'évidement (4a-d) du premier agencement (5a) est disposé radialement plus loin à l'intérieur que l'évidement (4e-h) du deuxième agencement (5b), et l'évidement (4e-h) d'un du premier et du deuxième agencement (5b) présente une plus grande étendue dans la direction circonférentielle que l'évidement (4a-d) et l'autre du premier et du deuxième agencement (5a) ; dans lequel
- dans au moins un agencement (5a-d), la première distance angulaire (11a-c, 15a-c, 19a-c, 24a-c) et la deuxième distance angulaire (11 d, 15d, 19d, 24d) sont différentes de sorte que l'agencement (5a-d) est réalisé comme un agencement irrégulier.

2. Noyau de stator selon la revendication 1, dans lequel
les évidements (4e-h) du deuxième agencement (5b) présentent une plus grande étendue dans la direction circonférentielle que les évidements (4a-d) du premier agencement (5a).

3. Noyau de stator selon la revendication 1 ou 2, dans lequel
- le premier agencement (5a) et le deuxième agencement (5b) sont réalisés comme un agencement irrégulier, ou
- le premier agencement (5a) est réalisé comme un agencement irrégulier et les évidements (4e-h) du deuxième agencement (5b) sont disposés régulièrement dans la direction circonférentielle de l'ensemble du noyau de stator (3), ou
- le deuxième agencement (5b) est réalisé comme un agencement irrégulier et les évidements (4a-d) du premier agencement (5a) sont disposés régulièrement dans la direction circonférentielle de l'ensemble du noyau de stator (3), ou
- les évidements (4a-d, 4e-h) du premier agencement (5a) et du deuxième agencement (5b) sont disposés régulièrement dans la direction circonférentielle de l'ensemble du noyau de stator (3).

4. Noyau de stator selon l'une quelconque des revendications précédentes, dans lequel
le noyau de stator (3) présente un espace de réception (6) pour un rotor (52) de la machine électrique (51) et une surface latérale (7) tournée vers l'espace de réception (6).

5. Noyau de stator selon la revendication 4, dans lequel
les évidements (4a-p) réalisent un troisième agencement (5c) d'évidements (4i-l) qui se suivent respectivement dans la direction circonférentielle et traversent la surface latérale (7).

6. Stator selon la revendication 5, dans lequel les évidements (4i-l) du troisième agencement (5c) réalisent des ouvertures d'encoche (B) du noyau de stator (3) qui relient les encoches (A) à l'espace de réception (6) ou des pseudo-ouvertures d'encoche du noyau de stator (3) qui réalisent des trous borgnes dans la direction radiale.

7. Stator selon la revendication 5 ou 6, dans lequel les évidements (4i-l) du troisième agencement (5c) sont disposés dans des positions angulaires dans la direction circonférentielle où ils se chevauchent avec les encoches (A) .

8. Stator selon l'une quelconque des revendications 5 à 7, dans lequel
le troisième agencement (5c) est réalisé sous forme d'agencement irrégulier.

9. Stator selon l'une quelconque des revendications 5 à 7, dans lequel
les évidements du troisième agencement (5b) sont disposés régulièrement dans la direction circonférentielle de l'ensemble du noyau de stator (3).

10. Stator selon l'une quelconque des revendications 4 à 9, dans lequel
les évidements (4a-p) réalisent un quatrième agencement (5d) d'évidements (4m-p) qui se suivent respectivement dans la direction circonférentielle et traversent la surface latérale (7).

11. Stator selon la revendication 10, dans lequel les évidements (4m-p) du quatrième agencement (5d) sont disposés dans des positions angulaires dans la direction circonférentielle qui sont situées entre celles d'une paire respective d'encoches voisines (A).

12. Stator selon la revendication 10 ou 11, dans lequel les évidements du quatrième agencement (5d) réalisent des pseudo-ouvertures d'encoche (C) qui réalisent des trous borgnes dans la direction radiale.

13. Stator selon l'une quelconque des revendications 10 à 12, dans lequel
le quatrième agencement (5d) est réalisé sous forme d'agencement irrégulier.

14. Stator selon l'une quelconque des revendications 10 à 12, dans lequel
les évidements (4m-p) du quatrième agencement (5d) sont disposés régulièrement dans la direction circonférentielle de l'ensemble du noyau de stator (3).

15. Machine électrique (51) destinée à entraîner un véhicule (50), comprenant un stator (1) selon l'une quelconque des revendications précédentes et un rotor (52) monté rotatif à l'intérieur du stator (1).
